# EUROPEAN PATENT SPECIFICATION

(11) **EP 3 688 107 B1**
(45) Date of publication and mention of the grant of the patent: **29.11.2023**
(21) Application number: 18862502.4
(22) Date of filing: 09.04.2018
(51) Int. Cl.: C09D 11/50, C09B 47/08, B41M 3/14, C09D 11/03, C09D 11/037, C09D 11/08, C09D 11/10, C09D 11/32, C09D 11/38

(54) **SECURING NEAR-INFRARED TAGGANT, METHOD FOR PRODUCING THE TAGGANT, NEAR-INFRARED ABSORBING AND REFLECTING INK COMPOSITION INCLUDING THE TAGGANT, AND ARTICLE HAVING THE TAGGANT PRINTED THEREON**
SICHERN VON NAHINFRAROT-MARKIERUNGSMITTELN, VERFAHREN ZUR HERSTELLUNG DES MARKIERUNGSMITTELS, NAHINFRAROT-ABSORBIERENDE UND -REFLEKTIERENDE TINTENZUSAMMENSETZUNG MIT DEM MARKIERUNGSMITTEL UND ARTIKEL MIT DARAUF GEDRUCKTEM MARKIERUNGSMITTEL
TRACEUR PROCHE INFRAROUGE DE FIXATION, PROCÉDÉ DE PRODUCTION DU TRACEUR, COMPOSITION D'ENCRE ABSORBANT ET RÉFLÉCHISSANT LE PROCHE INFRAROUGE COMPRENANT LE TRACEUR, ET ARTICLE COMPRENANT LE TRACEUR IMPRIMÉ SUR CELUI-CI

(30) Priority: 26.09.2017 KR 20170123996
(43) Date of publication of application: 05.08.2020
(73) Proprietor: Nano CMS Co., Ltd., Cheonan-si, Chungcheongnam-do 31040 (KR)
(72) Inventor: KIM, Shi Surk, Cheonan-si Chungcheongnam-do 31066 (KR); KIM, Jong Gyun, Daejeon 34890 (KR); LIM, Woo Sung, Cheonan-si Chungcheongnam-do 31099 (KR)
(74) Representative: Groth & Co. KB
(86) International application number: PCT/KR2018/004136
(87) International publication number: WO 2019/066177

(56) References cited:
- JP-A- H1 161 018
- JP-A- H09 263 658
- JP-A- 2005 272 588
- JP-A- 2006 282 980
- JP-B2- 2 515 356
- JP-B2- 3 265 034
- JP-B2- 4 308 005
- KR-B1- 101 835 310

## Description

### Technical Field

The present disclosure relates to a near-infrared absorbing ink composition used for printing concealable securing indicia, and articles on which the composition is printed. More specifically, the present disclosure relates to a near-infrared absorbing ink composition used for printing concealable securing indicia, wherein the ink composition includes absorbs light in the visible light spectrum of 380 to 780 nm, and has at least one colorant that reflects light in a near-infrared region exceeding 780 nm, and has a taggant with a maximum absorbing peak at a near-infrared wavelength of 925 nm. Further, the present disclosure relates to an article on which the ink composition is printed.

### Background Art

Certificates such as driver's license, passport, etc., checks, securities, banknotes, and branded products may be forged or altered. In order to prevent the forgery and alteration of such products, a marking with a magnetism or a marking that emits fluorescence by ultraviolet light is attached to the products. Thus, a genuine product may be distinguished from a counterfeit that is not marked with the mark or a counterfeit that is marked with a different mark.

A technique for discriminating the forgery or modulation of the article by measuring absorbing and reflection properties in the near-infrared region (780 to 1600 nm) wavelength range, which is not recognized by human vision may employ near-infrared absorbing ink.

In US Pat. No. 5,788,914 "NEAR INFRARED RAY ABSORBING COMPOUND HAVING HIGH DURABILITY AND ITS USE", phthalocyanines having a maximum absorption wavelength between 900 and 1300 nm are disclosed. The phthalocyanine may be prepared by reacting CI Pigment Green 7, CI Pigment Green 36, CI Pigment Green 37, and CI Pigment Green 38 in an organic solvent using potassium carbonate as a catalyst, wherein the phthalocyanine is formed by ring-fusing and substitution of aminothiophenols with alkylsulfonyl, arylsulfonyl, alkylcarbonyl groups being substituted.

European Patent 1 308 485 A1 "Ink set with IR-taggant" refers to an ink set for printing light-absorbing indicia containing two or more inks, and the article on which the ink is printed. The first ink group includes black, yellow and magenta inks, and the second ink group includes cyan or green phthalocyanine ink. The taggant is a copper phthalocyanine with substituted benzenethiol and having a maximum absorption peak at the near-infrared wavelength of 780 nm. Since the ink set uses a near-infrared taggant that absorbs a short wavelength, the above-mentioned ink set has a disadvantage that it is difficult to apply the ink set as blue and green inks.

Korean Patent Laid-Open No. 10-2005-0057527 "Method for marking and authenticating articles, and ink set" discloses a near-infrared ink set having absorbing peaks at 800 nm, 850 nm, 890 nm and 980 nm. Such one or more ink sets may be used as an ink selected from a group consisting of: a paste ink comprising engraved ink, letterpress ink and offset ink; a liquid ink comprising a screen printing ink, a helio-flexo ink and a gravure ink; electrostatic or electrophotographic printing toners; an inkjet ink including a thermal transfer inkjet ink and a continuous inkjet ink, etc. The patent document discloses a method of marking an article such as a bill, a document, a ticket, a foil, a thread, a label, a card or a commercial product via a printing, and a method of authenticating the article. Additionally, JP 4 308005 B2 can be cited as relevant prior art.

However, the above-mentioned prior arts do not disclose a technique capable of improving the anti-fake and anti-tampering effect and diversifying colors due to the fact that when printing with the same color using infrared reflective ink and near-infrared absorbing ink, the inks exhibit the same color in the visible region, and have absorbing and reflecting properties in the near-infrared wavelength region.

### [Prior Art Document]

### [Patent Literature]

(Patent Document 1) Korean Patent Laid-Open No. 10-2005-0057527 (2005. 06. 16)

### Disclosure of Invention

### Technical Problem

Thus, the purpose of the present disclosure is to provide a near-infrared absorbing ink composition having a maximum absorption wavelength of 925 nm wavelength via inclusion of a near-infrared taggant with a maximum absorption wavelength of 925 nm wavelength as obtained with a high yield, wherein the near-infrared absorbing ink composition absorbs a wavelength of 925 nm, which allows the near-infrared absorbing ink composition to be distinguished from conventional near-infrared absorbing inks.

Another purpose of the present disclosure is to provide a near-infrared absorbing ink composition capable of manifesting various colors due to the fact that the ink composition has a near-infrared absorption wavelength of 925 nm, and, thus, may not cause interferences, in the near-infrared wavelength region, which is a short wavelength near 780 nm, such that color expressions such as blue and green are available.

### Solution to Problem

In a first aspect of the present disclosure, there is provided a near-infrared absorbing and reflecting ink composition used to print concealable securing indicia, the ink composition comprising: at least one colorant absorbing visible light; a near-infrared taggant absorbing near-infrared; at least one filling agent selected from a group consisting of calcium carbonate, barium sulfate, talc and silicon dioxide; and at least one binder selected from a group consisting of phenol, rosin-modified phenol, xylene, urea, melamine, ketone, coumarone indene, petroleum, terpene, cyclic rubber, chlorinated rubber, alkyd, polyamide, acrylic, polyvinyl chloride, polyvinyl acetate, vinyl chloride-vinyl acetate copolymer, polyvinyl butyral, chlorinated polypropylene, epoxy, polyurethane and cellulose derivatives.

In one embodiment of the first aspect, the colorant is a dye or pigment absorbing light in a visible light spectrum of 380 to 780 nm and reflecting light in a near-infrared (NIR) range exceeding 780 nm, wherein the near-infrared taggant includes a near-infrared absorbing agent having a maximum absorption wavelength at 925 nm, wherein the near-infrared absorbing agent is copper (II) tetra-(1,4-benzothiazino)-octa-(2-aminothiophenyl)-phthalocyanine.

In one embodiment of the first aspect, the near-infrared absorbing agent is copper (II) tetra-(1,4-benzothiazino)-octa-(2-aminothiophenyl)-phthalocyanine having a following chemical formula I:

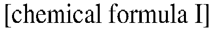

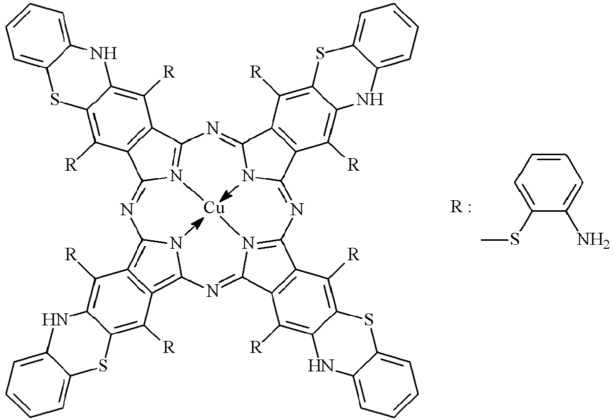

In one embodiment of the first aspect, the ink composition comprises 5 to 25 parts by weight of the colorant, 0.01 to 5 parts by weight of the near-infrared taggant, 20 to 30 parts by weight of the filling agent, and 30 to 35 parts by weight of the binder.

In one embodiment of the first aspect, the ink composition is contained in one selected from a group consisting of a dye inkjet ink, a pigment inkjet ink, a screen printing ink, a lithographic printing ink, a gravure printing ink, an intaglio printing ink, a letterpress ink, and a flexographic ink.

In a second aspect of the present disclosure, there is provided a near-infrared taggant, wherein the taggant includes copper (II) tetra-(1,4-benzothiazino)-octa-(2-aminothiophenyl), wherein the near-infrared taggant absorbs and reflects near-infrared light.

In one embodiment of the second aspect, the copper(II) tetra-(1,4-benzothiazino)-octa-(2-aminothiophenyl)-phthalocyanine is expressed as a following chemical formula I with a maximum absorption wavelength at 925 nm:

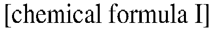

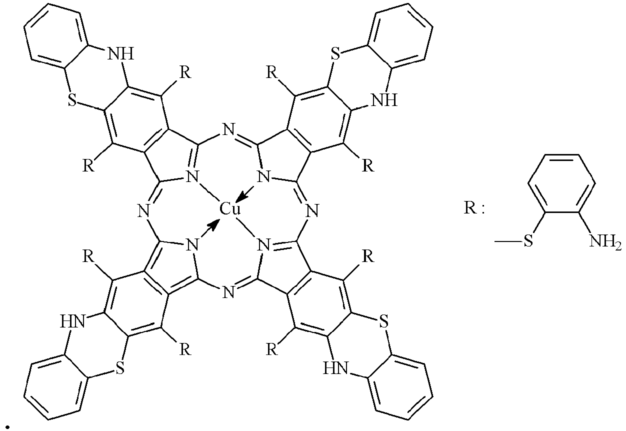

In a third aspect of the present disclosure, there is provided a method for producing a near-infrared absorbing and reflective ink composition, the method comprising:
providing 2-aminothiophenol, and copper (II) hexadecachloro phthalocyanine; and
obtaining copper (II) tetra-(1,4-benzothiazino)-octa-(2-aminothiophenyl)-phthalocyanine via ring-fusing and substitution between the 2-aminothiophenol and copper (II) hexadecachloro phthalocyanine using dimethylformamide as a solvent and using a potassium hydroxide as catalyst.

In one embodiment of the third aspect, the copper(II) tetra-(1,4-benzothiazino)-octa-(2-aminothiophenyl)-phthalocyanine is expressed as a following chemical formula I with a maximum absorption wavelength at 925 nm:

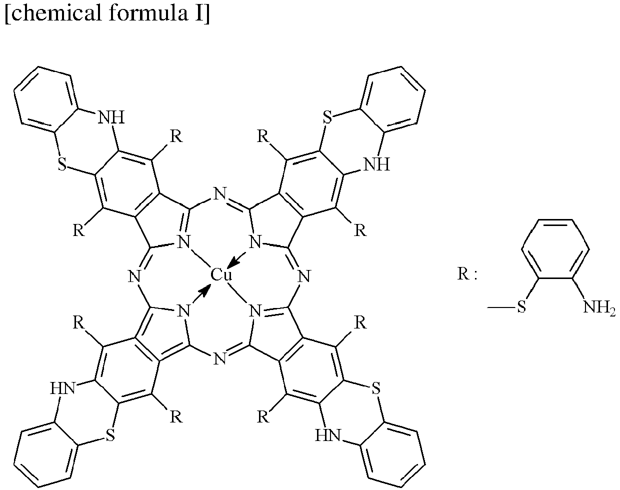

In a fourth aspect of the present disclosure, there is provided an article having concealable securing indicia printed thereon, wherein the indicia includes the ink composition as defined above, wherein the ink composition includes at least one colorant absorbing light in a visible light spectrum of 380 to 780 nm, wherein the ink composition exhibits spectroscopic absorbing properties at a near-infrared wavelength of 925 nm.

### Advantageous Effects of Invention

According to the present disclosure, the securing near-infrared taggant, the method of making the taggant, the near-infrared absorbing and reflective ink composition including the taggant may be applied to a product having an authenticity identification function by a device reading and an anti-tamper or forging effect on a certificate of a driver's license, a passport, a check, securities, a banknote and a brand product. This is due to the fact that the near-infrared taggant at 925 nm wavelength is synthesized with high yield and the near-infrared taggant is used, and, as a result, black is expressed due to the absorption characteristic in the infrared region of 780 to 1150 nm, while in the infrared region exceeding 1150 nm, colorless is expressed due to reflection characteristics.

Further, according to the present disclosure, when the same color is printed using the infrared reflection ink and the near-infrared absorbing ink according to the present disclosure, the same color is expressed in the visible region, while in the near-infrared wavelength region of 780 to 1150 nm, the absorption occurs, while reflective properties appear in the near-infrared region above 1150 nm. As a result, it is possible to maximize the authenticity discrimination and anti-tampering effects, compared to the carbon black. Further, it is possible to diversify colors and to achieve properties suitable for ink production and properties suitable for printing.

### Brief Description of Drawings

Figure 1 shows an absorption spectrum of a near-infrared taggant according to an embodiment 1 of the present disclosure.
Figure 2 shows an absorption spectrum of a near-infrared absorbing agent according to a comparison example 1.
Figure 3 shows an absorption spectrum of a near-infrared absorbing agent according to a comparison example 2.
Figure 4 shows absorption and reflection spectra of a black near-infrared absorbing ink according to the application example 1 of the present disclosure.
Figure 5 shows absorption and reflection spectra of a black near-infrared reflective ink according to a comparison example 3.
Figure 6 shows absorption and reflection spectra of a black near-infrared absorbing ink with carbon black according to a comparison example 4.

### Best Mode for Carrying out the Invention

Hereinafter, embodiments disclosed in this specification will be described in detail with reference to the accompanying drawings. The same reference numerals are assigned to the same or similar components irrespective of the reference numerals, and redundant descriptions of the components will be omitted. The suffix" module" and "unit used for components used in the following description are considered, given or interchanged with each other for ease of illustration. Thus, the suffix " module" and "unit do not have a meaning or role that distinguishes the components from each other. Further, descriptions and details of well-known steps and elements are omitted for simplicity of the description. Furthermore, in the following detailed description of the present disclosure, numerous specific details are set forth in order to provide a thorough understanding of the present disclosure.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section,

It will be understood that when an element or layer is referred to as being "connected to", or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present disclosure. As used herein, the singular forms "a" and "an" are intended to include the plural forms as well, unless the context clearly indicates otherwise.

It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items. Expression such as "at least one of" when preceding a list of elements may modify the entire list of elements and may not modify the individual elements of the list.

In accordance with the present disclosure, a near-infrared absorbing and reflecting ink composition may be used to print concealable securing indicia. The ink composition may comprise at least one colorant absorbing visible light; a near-infrared taggant absorbing near-infrared; at least one filling agent selected from a group consisting of calcium carbonate, barium sulfate, talc and silicon dioxide; and at least one binder selected from a group consisting of phenol, rosin-modified phenol, xylene, urea, melamine, ketone, coumarone indene, petroleum, terpene, cyclic rubber, chlorinated rubber, alkyd, polyamide, acrylic, polyvinyl chloride, polyvinyl acetate, vinyl chloride-vinyl acetate copolymer, polyvinyl butyral, chlorinated polypropylene, epoxy, polyurethane and cellulose derivatives.

In one embodiment, the colorant is a dye or pigment absorbing light in a visible light spectrum of 380 to 780 nm and reflecting light in a near-infrared (NIR) range exceeding 780 nm, wherein the near-infrared taggant includes a near-infrared absorbing agent having a maximum absorption wavelength at 925 nm, wherein the near-infrared absorbing agent is copper (II) tetra-(1,4-benzothiazino)-octa-(2-aminothiophenyl)-phthalocyanine.

In one embodiment, the near-infrared absorbing agent is copper (II) tetra-(1,4-benzothiazino)-octa-(2-aminothiophenyl)-phthalocyanine having a following chemical formula I:

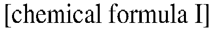

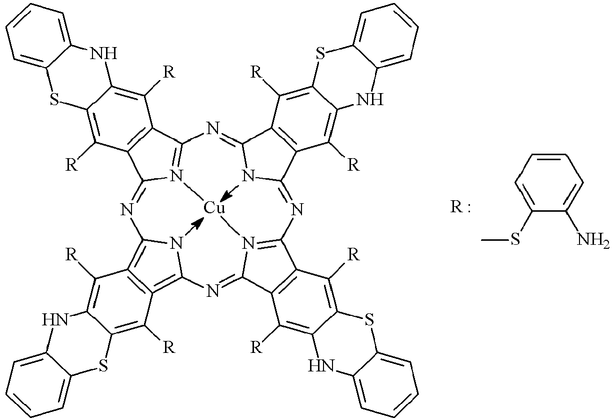

In one embodiment, the copper (II) tetra-(1,4-benzothiazino)-octa-(2-aminothiophenyl)-phthalocyanine may be obtained via ring-fusing and substitution between 2-aminothiophenol, and copper (II) hexadecachloro phthalocyanine using dimethylformamide as a solvent and using a potassium hydroxide as catalyst.

In one embodiment, the ink composition comprises 5 to 25 parts by weight of the colorant, 0.01 to 5 parts by weight of the near-infrared taggant, 20 to 30 parts by weight of the filling agent, and 30 to 35 parts by weight of the binder.

The colorants include common yellow, red and blue dyes and pigments with infrared reflective properties. The colorant may contain 5 to 25 parts by weight based on 100 parts by weight of the ink composition. If the content of the colorant is less than 5 parts by weight, the reflection property is poor. When the content of the colorant exceeds 25 parts by weight, the reflection property is good, but the printing suitability tends to become insufficient.

The near-infrared taggant contains 0.01 to 5 parts by weight based on 100 parts by weight of the ink composition. Preferably, the near-infrared taggant contains 0.5 to 2 parts by weight.

The filling agent comprises at least one or more selected from calcium carbonate, barium sulfate, talc, or silicon dioxide. The filling agent is characterized by containing 20 to 30 parts by weight based on 100 parts by weight of the ink composition. If the filling agent content is less than 20 parts by weight, wipability thereof is insufficient. When the content of the agent is more than 30 parts by weight, the color concentration decreases and the transfer ability becomes insufficient.

The binder may be selected from a group consisting of phenol, rosin-modified phenol, xylene, urea, melamine, ketone, coumarone indene, petroleum, terpene, cyclic rubber, chlorinated rubber, alkyd, polyamide, acrylic, polyvinyl chloride, polyvinyl acetate, vinyl chloride-vinyl acetate copolymer, polyvinyl butyral, chlorinated polypropylene, epoxy, polyurethane and cellulose derivatives.

The binder may be contained in an amount of 30 to 35 parts by weight based on 100 parts by weight of the ink composition. If the binder content is less than 30 parts by weight, the transfer ability and the wipability thereof become insufficient. If the content is more than 35 parts by weight, the set to touch drying of the ink tends to be delayed and set-off tends to become insufficient.

In an embodiment, the ink composition may further comprise an auxiliary agent. The auxiliary agent may be an aliphatic hydrocarbon solvent, a dispersant, and/or a drying agent. The content of the adjuvant may be preferably 15 to 35 parts by weight based on 100 parts by weight of the ink composition. In this connection, if the content is less than 15 parts by weight, the fluidity of the ink is low and the tack is high, and, thus, the transfer ability decreases. If the content is more than 35 parts by weight, the fluidity increases and the sharpness and set-off become insufficient.

The components are mixed and the mixture is milled four to five times on a three roll mill, such that their physical properties are adjusted to inks suitable for each printing.

In one embodiment, the ink composition is contained in one selected from a group consisting of a dye inkjet ink, a pigment inkjet ink, a screen printing ink, a lithographic printing ink, a gravure printing ink, an intaglio printing ink, a letterpress ink, and a flexographic ink.

In accordance with the present disclosure, there is provided a near-infrared taggant, wherein the taggant includes copper (II) tetra-(1,4-benzothiazino)-octa-(2-aminothiophenyl), wherein the near-infrared taggant absorbs and reflects near-infrared light.

In one embodiment of the taggant, the copper(II) tetra-(1,4-benzothiazino)-octa-(2-aminothiophenyl)-phthalocyanine is expressed as a following chemical formula I with a maximum absorption wavelength at 925 nm:

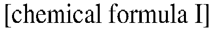

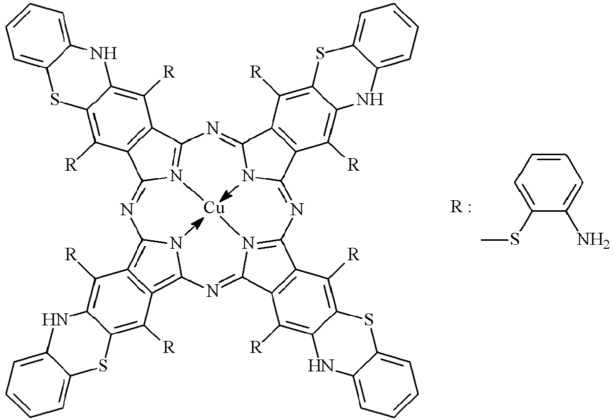

In accordance with the present disclosure, there is provided a method for producing a near-infrared absorbing and reflective ink composition, the method comprising:
providing 2-aminothiophenol, and copper (II) hexadecachloro phthalocyanine; and
obtaining copper (II) tetra-(1,4-benzothiazino)-octa-(2-aminothiophenyl)-phthalocyanine via ring-fusing and substitution between the 2-aminothiophenol and copper (II) hexadecachloro phthalocyanine using dimethylformamide as a solvent and using a potassium hydroxide as catalyst.

In one embodiment of the method, the copper(II) tetra-(1,4-benzothiazino)-octa-(2-aminothiophenyl)-phthalocyanine is expressed as a following chemical formula I with a maximum absorption wavelength at 925 nm:

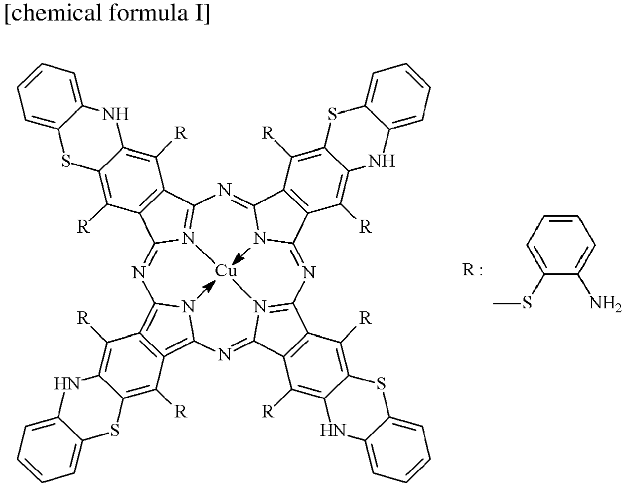

In accordance with the present disclosure, there is provided an article having concealable securing indicia printed thereon, wherein the indicia includes the ink composition as defined above, wherein the ink composition includes at least one colorant absorbing light in a visible light spectrum of 380 to 780 nm, wherein the ink composition exhibits spectroscopic absorbing properties at a near-infrared wavelength of 925 nm.

According to the present disclosure, the securing near-infrared taggant, the method of making the taggant, the near-infrared absorbing and reflective ink composition including the taggant may be applied to a product having an authenticity identification function by a device reading and an anti-tamper or forging effect on a certificate of a driver's license, a passport, a check, securities, a banknote and a brand product. This is due to the fact that the near-infrared taggant at 925 nm wavelength is synthesized with high yield and the near-infrared taggant is used, and, as a result, black is expressed due to the absorption characteristic in the infrared region of 780 to 1150 nm, while in the infrared region exceeding 1150 nm, colorless is expressed due to reflection characteristics.

Further, according to the present disclosure, when the same color is printed using the infrared reflection ink and the near-infrared absorbing ink according to the present disclosure, the same color is expressed in the visible region, while in the near-infrared wavelength region of 780 to 1150 nm, the absorption occurs, while reflective properties appear in the near-infrared region above 1150 nm. As a result, it is possible to maximize the authenticity discrimination and anti-tampering effects, compared to the carbon black. Further, it is possible to diversify colors and to achieve properties suitable for ink production and properties suitable for printing.

Hereinafter, the present disclosure will be described in more detail through an embodiment. The following embodiments are for illustrative purposes only and are not intended to limit the scope of the present disclosure.

### Embodiment 1

### Production of near-infrared taggant

3 gr of nonionic surfactant is mixed with 300 ml of distilled water. The mixture is poured into a one liter three-neck round bottom flask. 28.19 g (0.025 mol) of copper (II) hexadecachloro phthalocyanine is slowly added into the flask, and then stirred and dispersed (A). Thereby, the first mixture is produced. In another three-necked roundbottomed flask, 200 ml of dimethylformamide are mixed with 50 g (0.4 mol) of 2-aminothiopheol and then dissolved by stirring to produce a second mixture (B). The second mixture is introduced into the round flask used in the step (A). Thereby, the first mixture and the second mixture are mixed to produce a third mixture. Then, 22.4 g (0.4 mol) of potassium hydroxide is added to the third mixture while slowly maintaining the temperature at 60 degree C and, then stirred. Thereby, a fourth mixture is produced. The fourth mixture is then heated and reacted at 115 to 120 degree C for 3 hours and then cooled to 60 degree C.

The cooled fourth mixture is then dissolved in 300 ml of ethanol. The resulting solution was stirred at room temperature for 1 hour. The resulting black solid product is filtered off. The filtered product is a wet cake. The wet cake is sufficiently purified with water and acetone. The cake is dried in an oven drier. Thus, the copper (II) tetra-(1,4-benzothiazino) -octa-(2-aminothiophenyl) phthalocyanine according to the chemical formula 1 may be obtained with high yield.

Elemental analysis and ICP measurement results of the compound thus obtained are shown in Table 1 below, and the overall purity thereof was analyzed to be 99.76%.

**[Table 1]**

| Items | C | H | N | S | Cu |
|---|---|---|---|---|---|
| Theoretical calculation | 61.05 | 3.35 | 13.69 | 18.80 | 3.11 |
| Analysis result | 60.92 | 3.24 | 13.50 | 19.12 | 2.98 |

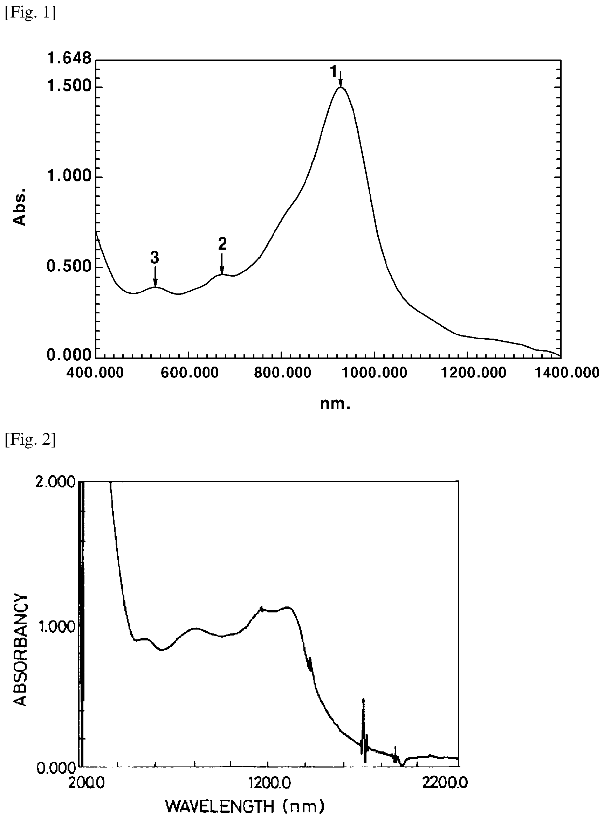

The maximum absorption wavelength of the present compound is listed in Table 2, along with that in a comparison example. Absorbances of the present compound and comparison example are shown in Figure 1.

### Comparison examples 1 and 2

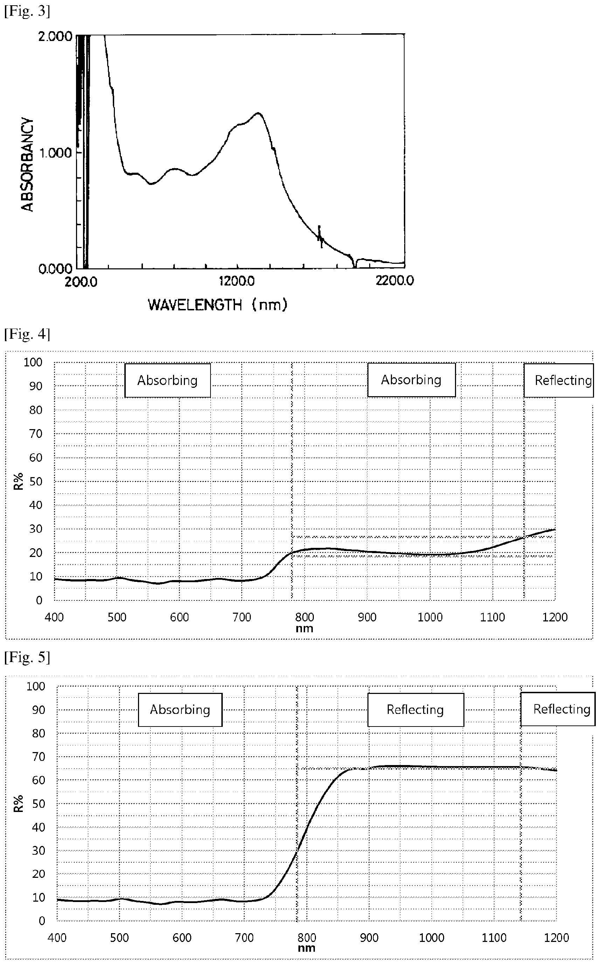

On the basis of U.S. Patent No. 5,788,914, aminothiophenols having substituted alkylcarbonyl and arylcarbonyl groups are substituted with ring-fused. In this way, the copper phthalocyanine compound is produced. The functional groups and the maximum absorption wavelength of the copper phthalocyanine compounds thus produced are described in Table 2 together with those in the present embodiment. Absorbances thereof are shown in Figure 2 and Figure 3.

**[Table 2]**

| Items | Functional group | maximum absorptionwavelength |
|---|---|---|
| Embodiment 1 | tetra-(1,4-benzothiazino)-octa-(2-aminothiopheny 1) | 925 nm |
| Comparison example 1based on US5,788,914 | | 1300 nm |
| comparison example 2 based on US 5,788,914 | | 1300 nm |

### Application example 1

### Manufacture of black near-infrared absorbing ink

The raw materials constituted as described below were mixed and the mixture was milled four times on a three roll mill to prepare a black near-infrared absorbing ink:
- binder: Rosin-modified phenolic resin (30%);
- colorants: CI Pigment Yellow 13 (1.5%), CI Pigment Red 150 (1.5%), C.I Pigment Blue 15: 3 (1.5%);
- near-infrared taggant: copper (II) tetra-(1,4-benzothiazino)-octa-(2-aminothio-phenyl) phthalocyanine (1%) in accordance with the embodiment 1;
- filling agent: calcium carbonate (30%)
- other auxiliaries: cobalt-based desiccant (1%), aliphatic hydrocarbon solvent (33.5%)

For the three-color-based black pigment containing the near-infrared taggant (the black pigment may be prepared by mixing red, yellow and blue reflective pigments), absorption and reflection intensities were measured in the visible region of 400 to 1200 nm and in near-infrared region. The measurement results are shown in Figure 4. The absorption and reflection characteristics based on the wavelengths are shown in Table 3.

### Comparison example 3

### Manufacture of black near-infrared reflective ink

The raw materials constituted as described below were mixed and the mixture was milled four times on a three roll mill to prepare a black near-infrared reflective ink:
- binder: Rosin-modified phenolic resin (30%);
- colorants: CI Pigment Yellow 13 (1.5%), CI Pigment Red 150 (1.5%), C.I Pigment Blue 15: 3 (1.5%);
- filling agent: calcium carbonate (30%)
- other auxiliaries: cobalt-based desiccant (1%), aliphatic hydrocarbon solvent (34.5%)

For the three-color-based black pigment (the black pigment may be prepared by mixing red, yellow and blue reflective pigments), absorption and reflection intensities were measured in the visible region of 400 to 1200 nm and in near-infrared region. The measurement results are shown in Figure 5. The absorption and reflection characteristics based on the wavelengths are shown in Table 3.

### Comparison example 4

### Manufacture of black near-infrared absorbing ink including carbon black

The raw materials constituted as described below were mixed and the mixture was milled four times on a three roll mill to prepare a black near-infrared absorbing ink:
- binder: Rosin-modified phenolic resin (30%);
- colorant: carbon black (5%);
- filling agent: calcium carbonate (30%)
- other auxiliaries: cobalt-based desiccant (1%), aliphatic hydrocarbon solvent (34%)

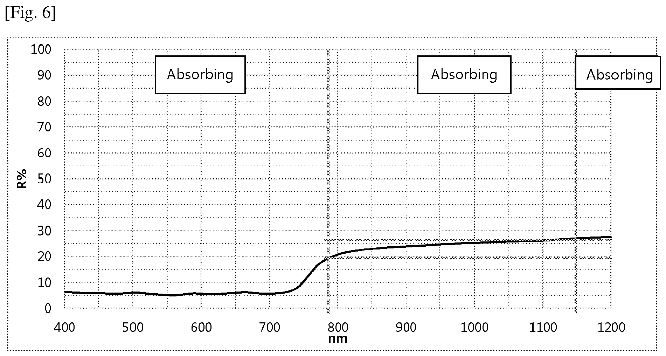

For the black near-infrared absorbing ink including the carbon black, absorption and reflection intensities were measured in the visible region of 400 to 1200 nm and in near-infrared region. The measurement results are shown in Figure 6. The absorption and reflection characteristics based on the wavelengths are shown in Table 3.

**[Table 3]**

| | Colorants | near-infrare d taggant | absorbing and reflective characteristics based on wavelengths | | |
|---|---|---|---|---|---|
| | | | < 780nm | 780 to 1150nm | 1150nm < |
| applicatio n example 1 | three-colors 4.5% | embodiment 1% | absorbing | absorbing | reflective |
| | R% | | 8 | 19 to 26 | 26 < |
| compariso n example 3 | three-colors 4.5% | - | absorbing | reflective | reflective |
| | R % | | 8 | 65 | 65 |
| compariso n example 4 | Carbon black 5% | - | absorbing | absorbing | absorbing |
| | R% | | 5 | 20 to 26 | 26 to 30 |

From the application example 1 and comparison example 3, in the visible light region of less than 780 nm, the application example 1 and the comparison example 3 have the same absorption. In the near-infrared region from 780 nm to less than 1150 nm, the application example 1 has an absorption characteristic R% of 19 to 26%. In the case of the comparison example 3, the reflection characteristic R% is 65% in the near-infrared region from 780 nm to less than 1150 nm. It was confirmed that reflectance difference ΔR% was more than 40% between the application example 1 and comparison example 3 in the near-infrared region from 780 nm to less than 1150 nm.

Further, from the application example 1 and the comparison example 4, it is confirmed that the comparison example 4 shows an absorption capacity 5% in the visible light region of less than 780 nm. In the near-infrared region from 780 nm to less than 1150 nm, the absorption capacity of the application example 1 is 19 to 26%. The absorption capacity of the ink containing 5% of carbon black according to the comparison example 4 is 20 to 26% in the near-infrared region from 780 nm to less than 1150 nm. In the near-infrared region above 1150 nm, the absorbance of the application example starts at 26% and gradually increases. The absorption of the ink containing 5% carbon black according to the comparison example 4 is 26 to 30% in the near-infrared region above 1150 nm.

## Claims

1. A near-infrared absorbing and reflecting ink composition used to print concealable securing indicia, the ink composition comprising:
at least one colorant absorbing visible light;
a near-infrared taggant absorbing near-infrared;
at least one filling agent selected from a group consisting of calcium carbonate, barium sulfate, talc and silicon dioxide; and
at least one binder selected from a group consisting of phenol, rosin-modified phenol, xylene, urea, melamine, ketone, coumarone indene, petroleum, terpene, cyclic rubber, chlorinated rubber, alkyd, polyamide, acrylic, polyvinyl chloride, polyvinyl acetate, vinyl chloride-vinyl acetate copolymer, polyvinyl butyral, chlorinated polypropylene, epoxy, polyurethane and cellulose derivatives;
wherein the colorant is a dye or pigment absorbing light in a visible light spectrum of 380 to 780 nm and reflecting light in a near-infrared (NIR) range exceeding 780 nm,
wherein the near-infrared taggant includes a near-infrared absorbing agent having a maximum absorption wavelength at 925 nm, wherein the near-infrared absorbing agent is copper (II) tetra-(1,4-benzothiazino)-octa-(2-aminothiophenyl)-phthalocyanine having a following chemical formula I:

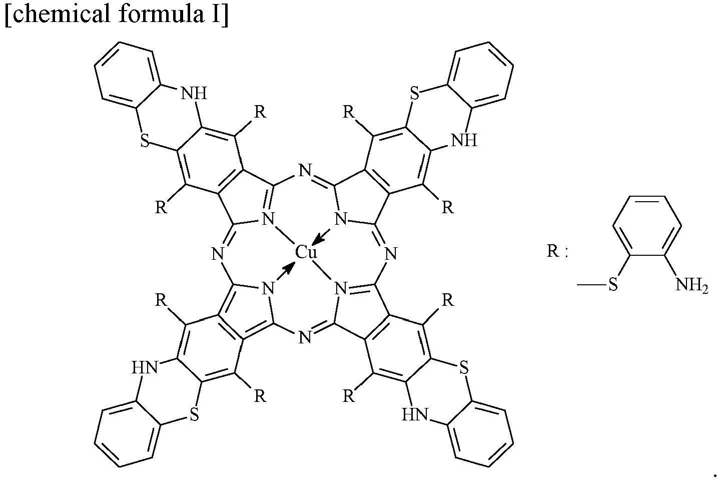

2. The composition of claim 1, wherein the ink composition comprises 5 to 25 parts by weight of the colorant, 0.01 to 5 parts by weight of the near-infrared taggant, 20 to 30 parts by weight of the filling agent, and 30 to 35 parts by weight of the binder.

3. The composition of claim 1, wherein the ink composition is contained in one selected from a group consisting of a dye inkjet ink, a pigment inkjet ink, a screen printing ink, a lithographic printing ink, a gravure printing ink, an intaglio printing ink, a letterpress ink, and a flexographic ink.

4. A near-infrared taggant, wherein the taggant includes copper (II) tetra- (1,4-benzothiazino)-octa-(2-aminothiophenyl)-phthalocyanine, wherein the near-infrared taggant absorbs and reflects near-infrared light.

5. The taggant of claim 4, wherein the copper(II) tetra-(1,4-benzothiazino)-octa-(2-aminothiophenyl)-phthalocyanine is expressed as a following chemical formula I with a maximum absorption wavelength at 925 nm:

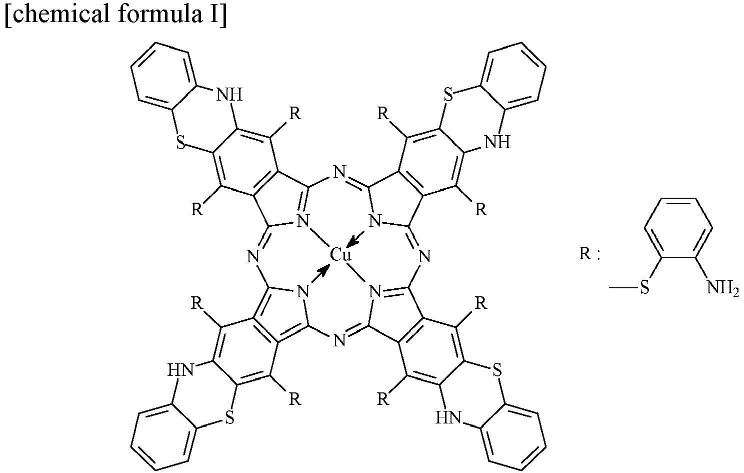

6. A method for producing a near-infrared absorbing and reflective ink composition, the method comprising:
providing 2-aminothiophenol, and copper (II) hexadecachloro phthalocyanine; and
obtaining copper (II) tetra-(1,4-benzothiazino)-octa-(2-aminothiophenyl)-phthalocyanine via ring-fusing and substitution between the 2-aminothiophenol and copper (II) hexadecachloro phthalocyanine using dimethylformamide as a solvent and using a potassium hydroxide as catalyst.

7. The method of claim 6, wherein the copper(II) tetra-(1,4-benzothiazino)-octa-(2-aminothiophenyl)-phthalocyanine is expressed as a following chemical formula I with a maximum absorption wavelength at 925 nm:

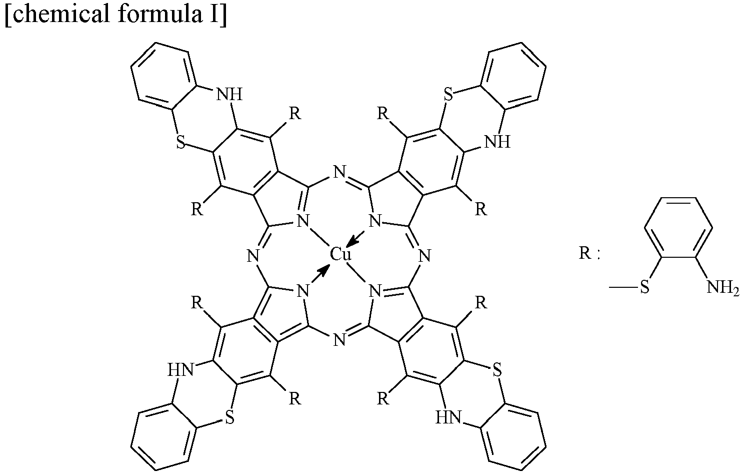

8. An article having concealable securing indicia printed thereon, wherein the indicia includes the ink composition according to claim 1,
wherein the ink composition includes at least one colorant absorbing light in a visible light spectrum of 380 to 780 nm,
wherein the ink composition exhibits spectroscopic absorbing properties at a near-infrared wavelength of 925 nm.

## Patentansprüche

1. Nahinfrarot-absorbierende und -reflektierende Tintenzusammensetzung, die zum Drucken von verdeckbaren Sicherungszeichen verwendet wird, wobei die Tintenzusammensetzung Folgendes umfasst:
mindestens ein sichtbares Licht absorbierendes Färbemittel;
ein Nahinfrarot absorbierendes Nahinfrarot-Markierungsmittel;
mindestens ein Füllmittel ausgewählt aus der Gruppe bestehend aus Calciumcarbonat, Bariumsulfat, Talkum und Siliciumdioxid; und
mindestens ein Bindemittel ausgewählt aus der Gruppe bestehend aus Phenol, Kolophonium-modifiziertem Phenol, Xylol, Harnstoff, Melamin, Keton, Cumaroninden, Petroleum, Terpen, cyclischem Kautschuk, chloriertem Kautschuk, Alkyd, Polyamid, Acryl, Polyvinylchlorid, Polyvinylacetat, Vinylchlorid-Vinylacetat-Copolymer, Polyvinylbutyral, chloriertem Polypropylen, Epoxy, Polyurethan und Cellulosederivaten;
wobei das Färbemittel ein Farbstoff oder Pigment ist, der bzw. das Licht in einem Spektrum des sichtbaren Lichts von 380 bis 780 nm absorbiert und Licht in einem Bereich des nahen Infrarot (NIR) reflektiert, der 780 nm übersteigt,
wobei das Nahinfrarot-Markierungsmittel ein Nahinfrarot-Absorptionsmittel mit einer maximalen Absorptionswellenlänge bei 925 nm beinhaltet, wobei das Nahinfrarot-Absorptionsmittel Kupfer(II)-tetra(1,4-benzothiazino)-octa(2-aminothiophenyl)phthalocyanin mit der folgenden chemischen Formel I ist:

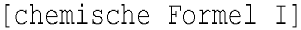

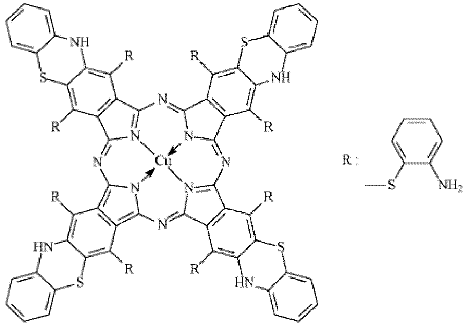

2. Zusammensetzung nach Anspruch 1, wobei die Tintenzusammensetzung 5 bis 25 Gewichtsteile des Färbemittels, 0,01 bis 5 Gewichtsteile des Nahinfrarot-Markierungsmittels, 20 bis 30 Gewichtsteile des Füllmittels und 30 bis 35 Gewichtsteile des Bindemittels umfasst.

3. Zusammensetzung nach Anspruch 1, wobei die Tintenzusammensetzung in einer ausgewählt aus einer Gruppe bestehend aus einer Farbstoff-Tintenstrahltinte, einer Pigment-Tintenstrahltinte, einer Siebdrucktinte, einer lithografischen Drucktinte, einer Tiefdrucktinte, einer Intaglio-Drucktinte, einer Hochdrucktinte und einer Flexodrucktinte enthalten ist.

4. Nahinfrarot-Markierungsmittel, wobei das Markierungsmittel Kupfer(II)-tetra(1,4-benzothiazino)-octa(2-aminothiophenyl)phthalocyanin beinhaltet, wobei das Nahinfrarot-Markierungsmittel Nahinfrarot-Licht absorbiert und reflektiert.

5. Markierungsmittel nach Anspruch 4, wobei das Kupfer(II)-tetra-(1,4-benzothiazino)-octa(2-aminothiophenyl)phthalocyanin als folgende chemische Formel I mit einer maximalen Absorptionswellenlänge bei 925 nm ausgedrückt wird:

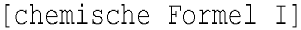

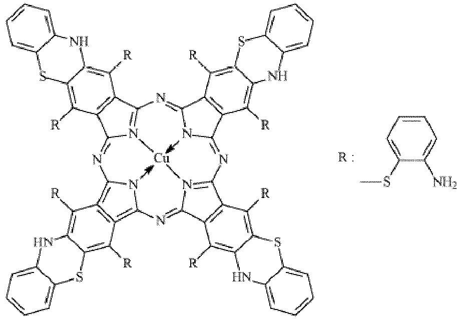

6. Verfahren zum Herstellen einer Nahinfrarot-absorbierenden und -reflektierenden Tintenzusammensetzung, wobei das Verfahren Folgendes umfasst:
Bereitstellen von 2-Aminothiophenol und Kupfer(II)-hexadecachlorphthalocyanin; und
Erhalten von Kupfer(II)-tetra(1,4-benzothiazino)-octa(2-aminothiophenyl)phthalocyanin durch Ringkondensation und Substitution zwischen dem 2-Aminothiophenol und Kupfer(II)-hexadecachlorphthalocyanin unter Verwendung von Dimethylformamid als Lösungsmittel und unter Verwendung eines Kaliumhydroxids als Katalysator.

7. Verfahren nach Anspruch 6, wobei das Kupfer(II)-tetra(1,4-benzothiazino)-octa(2-aminothiophenyl)phthalocyanin als folgende chemische Formel I mit einer maximalen Absorptionswellenlänge bei 925 nm ausgedrückt wird:

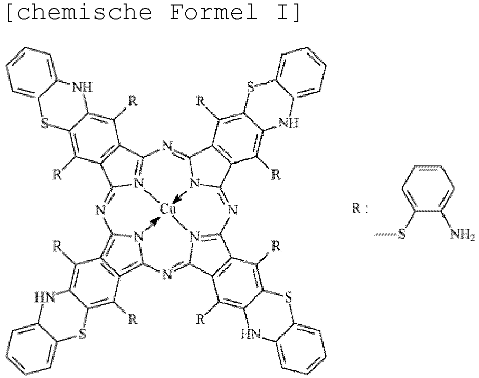

8. Artikel mit darauf gedruckten verdeckbaren Sicherungszeichen, wobei die Zeichen die Tintenzusammensetzung nach Anspruch 1 umfassen,
wobei die Tintenzusammensetzung mindestens ein Licht in einem Spektrum des sichtbaren Lichts von 380 bis 780 nm absorbierendes Färbemittel beinhaltet,
wobei die Tintenzusammensetzung spektroskopische Absorptionseigenschaften bei einer Nahinfrarot-Wellenlänge von 925 nm aufweist.

## Revendications

1. Composition d'encre absorbant et réfléchissant le proche infrarouge utilisée pour imprimer des marques de fixation dissimulables, la composition d'encre comprenant :
au moins un colorant absorbant la lumière visible ;
un traceur proche infrarouge absorbant le proche infrarouge ;
au moins un agent de remplissage choisi dans le groupe constitué du carbonate de calcium, du sulfate de baryum, du talc et du dioxyde de silicium ; et
au moins un liant choisi dans le groupe constitué du phénol, du phénol modifié par de la colophane, du xylène, de l'urée, de la mélamine, de la cétone, de l'indène de coumarone, du pétrole, du terpène, du caoutchouc cyclique, du caoutchouc chloré, de l'alkyde, du polyamide, de l'acrylique, du chlorure de polyvinyle, de l'acétate de polyvinyle, du copolymère chlorure de vinyle-acétate de vinyle, du butyral de polyvinyle, du polypropylène chloré, de l'époxy, du polyuréthane et des dérivés cellulosiques ;
dans laquelle le colorant est un colorant ou pigment absorbant la lumière dans un spectre de lumière visible de 380 à 780 nm et réfléchissant la lumière dans une plage du proche infrarouge (NIR) supérieure à 780 nm,
dans laquelle le traceur proche infrarouge comporte un agent absorbant le proche infrarouge ayant une longueur d'onde d'absorption maximale à 925 nm, dans laquelle l'agent absorbant le proche infrarouge est la tétra-(1,4-benzothiazino)-octa-(2-aminothiophényl)-phtalocyanine de cuivre (II) ayant la formule chimique I suivante :

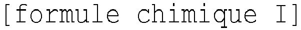

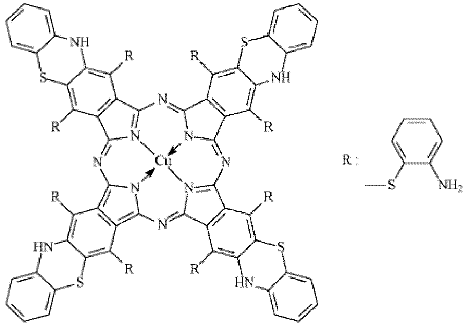

2. Composition selon la revendication 1, dans laquelle la composition d'encre comprend de 5 à 25 parties en poids du colorant, de 0,01 à 5 parties en poids du traceur proche infrarouge, de 20 à 30 parties en poids de l'agent de remplissage, et de 30 à 35 parties en poids du liant.

3. Composition selon la revendication 1, dans laquelle la composition d'encre est contenue dans un élément choisi dans un groupe constitué d'une encre à jet d'encre colorante, d'une encre à jet d'encre pigmentaire, d'une encre sérigraphique, d'une encre d'impression lithographique, d'une encre d'impression héliographique, d'une encre taille-douce, d'une encre de typographie et d'une encre flexographique.

4. Traceur proche infrarouge, dans lequel le traceur comporte de la tétra-(1,4-benzothiazino)-octa-(2-aminothiophényl)-phtalocyanine de cuivre (II), dans lequel le traceur proche infrarouge absorbe et réfléchit la lumière proche infrarouge.

5. Traceur selon la revendication 4, dans lequel la tétra-(1,4-benzothiazino)-octa(2-aminothiophényl)-phtalocyanine de cuivre(II) est exprimée par la formule chimique I suivante avec une longueur d'onde d'absorption maximale à 925 nm :

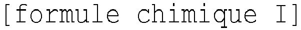

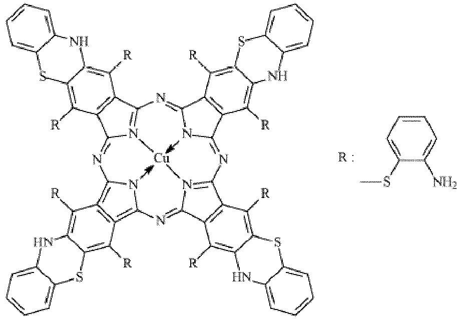

6. Procédé de fabrication d'une composition d'encre absorbant et réfléchissant le proche infrarouge, le procédé comprenant :
la fourniture de 2-aminothiophénol et de l'hexadécachlorophtalocyanine de cuivre (II) ; et
l'obtention de tétra-(1,4-benzothiazino)-octa-(2-aminothiophényl)-phtalocyanine de cuivre (II) par fusion cyclique et substitution entre le 2-aminothiophénol et l'hexadécachlorophtalocyanine de cuivre (II) à l'aide de diméthylformamide comme solvant et à l'aide d'hydroxyde de potassium comme catalyseur.

7. Procédé selon la revendication 6, dans lequel la tétra-(1,4-benzothiazino)-octa-(2-aminothiophényl)-phtalocyanine de cuivre(II) est exprimée par la formule chimique I suivante avec une longueur d'onde d'absorption maximale à 925 nm :

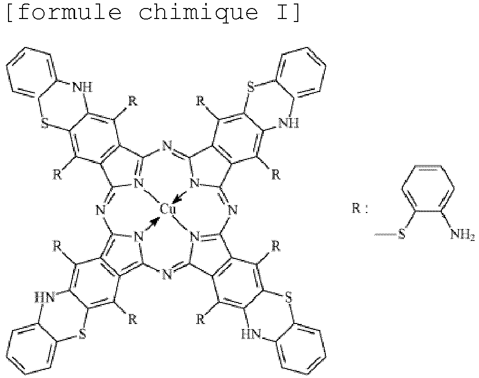

8. Article sur lequel sont imprimées des marques de fixation dissimulables, dans lequel les marques comportent la composition d'encre selon la revendication 1,
dans lequel la composition d'encre comporte au moins un colorant absorbant la lumière dans un spectre de lumière visible de 380 à 780 nm,
dans lequel la composition d'encre présente des propriétés d'absorption spectroscopique à une longueur d'onde proche infrarouge de 925 nm.
